# EUROPÄISCHE PATENTSCHRIFT

(11) **EP 2 824 346 B1**
(45) Veröffentlichungstag und Bekanntmachung des Hinweises auf die Patenterteilung: **29.11.2017**
(21) Anmeldenummer: 14173202.4
(22) Anmeldetag: 20.06.2014
(51) Int. Cl.: F16D 13/75, F16D 13/58, F16D 13/50

(54) **Reibungskupplung für Antriebsstrang eines Kraftfahrzeuges**
Friction Clutch for Motor Vehicle Powertrain
Embrayage à friction pour chaîne cinématique d'un véhicule à moteur

(30) Priorität: 11.07.2013 DE 102013213595
(43) Veröffentlichungstag der Anmeldung: 14.01.2015
(73) Patentinhaber: Schaeffler Technologies AG & Co. KG, 91074 Herzogenaurach (DE)
(72) Erfinder: Schneider, Michael, 76534 Baden-Baden (DE)

(56) Entgegenhaltungen:
- EP-A2- 1 832 769
- WO-A1-2013/091598
- DE-A1-102008 027 056
- DE-A1-102009 045 980
- DE-A1-102010 034 810

## Beschreibung

Die Erfindung betrifft eine Reibungskupplung gemäß dem Oberbegriff des Patentanspruchs 1. Insbesondere betrifft die Erfindung eine Reibungskupplung für einen Antriebsstrang eines Kraftfahrzeuges, mit einem Stellhebelelement, wie einer Tellerfeder, das eine relativ zu einer Druckplatte verschiebbare Anpressplatte zumindest in einem eingekuppelten Zustand gegen einen Reibbelag einer Kupplungsscheibe andrückt, mit einer Stützfeder, die das Stellhebelelement mit einer Stützfederkraft an einer der Anpressplatte zugewandten ersten Seite abstützt, sowie mit einem Gegenabstützelement, wie einem Drahtring, das an einer zweiten, einem drehfest mit der Druckplatte verbundenen Kupplungsdeckel zugewandten Seite des Stellhebelelementes, das Stellhebelelement lagernd, anliegt, sowie einem Antriebsstrang für ein Kraftfahrzeug, wie einen Pkw, Lkw oder Bus mit einer solchen Reibungskupplung.

Ein bereits bekanntes Reibungskupplungssystem ist bspw. in der Druckschrift DE 10 2010 051 150 A1 offenbart. Die Reibungskupplung, die in dieser Druckschrift offenbart ist, weist eine zwischen einer Gegendruckplatte und einem an diese fest angeordneten Deckel drehfest und entgegen der Wirkung von am Deckel angeordneten Blattfedern axial verlagerbar angeordneten Anpressplatte auf. Auch eine im geschlossenen Zustand der Reibungskupplung zwischen Reibflächen der Gegendruckplatte und Anpressplatte angeordnete Reibbeläge einer Kupplungsscheibe verspannende Tellerfeder ist hierin enthalten. Die Tellerfeder ist gegenüber dem Deckel mittels eines in Umfangsrichtung federbelasteten Verstellrings mit in Umfangsrichtung angeordneten, mit Gegenkanten des Deckels eine einen Verschleiß der Reibbeläge kompensierende Nachstelleinrichtung bildenden Rampenanschlags begrenzt. Die Tellerfeder ist zudem bei einer axialen Belastung radial innen angeordneter Tellerfederzungen mittels eines Ausrücksystems gegenüber einer sich axial am Deckel abstützenden Sensorfeder abgestützt. Die Sensorfeder stützt sich radial außen mittels einer Kuppe an der Tellerfeder und radial innerhalb eines Stülppunktes an der axial gegenüberliegenden Seite der Kupplung am Deckel ab. Diese Druckschrift offenbart somit eine Optimierung der die Nachstellung beeinflussenden Sensorfeder auf relativ aufwändige Art, nämlich durch eine spezielle, aufwändig herzustellende Form der Sensorfeder.

Es ist weiterhin interner Stand der Technik bekannt, durch den eine solch aufwändige Ausgestaltung einer Sensorfeder vermieden werden soll und anstatt einer Sensorfeder eine übliche Stützfeder verwendet wird, wobei ein Hystereseverhalten der Tellerfeder dadurch erzeugt wird, dass die Stützfeder an dem Stellhebelelement an einer radial äußeren Auflagefläche als das Abstützelement an dem Stellhebel anliegt. Durch diese unterschiedlichen radialen Abstände zwischen Stützfeder und Abstützelement entsteht durch die Federkraft der Stützfeder (Stützfederkraft) ein Moment, das die Anpresskraft der Haupttellerfeder an der Anpressplatte nachteilhafterweise reduziert. Im Betrieb der Reibungskupplung kann es insbesondere bei auftretenden axialen Schwingungen der mit der Kupplung verbundenen Verbrennungskraftmaschine und den dadurch erzeugten Relativbewegungen zwischen der Kupplungsscheibe und der Druckplatte / Anpressplatte zu unerwünschten Nebengeräuschen, insbesondere im Getriebe, kommen. Denn beim Ein- und / oder Auskuppelvorgang kann eine solche Relativbewegung dazu führen, dass es zu einem ruckartig ablaufenden Verbinden / Entfernen der Anpressplatte mit / von der Kupplungsscheibe kommen, da eine zu schwache Tellerfeder die notwendige Anpresskraft noch nicht oder nicht mehr auf die Anpressplatte aufbringen kann. Dadurch kommt es wiederum zu Drehmomentenschwankungen an der Getriebeeingangswelle. Diese Schwankungen können in manchen Betriebszuständen gar so stark sein, dass es zu einer unerwünschten Geräuscherzeugung, wie ein Kreischen oder Schnattern, innerhalb des Getriebes führen kann. Um in diesem Fall eine zusätzliche Hysterese / ein verstärktes Hystereseverhalten durch einen versetzten Durchmesser zu erzeugen, müsste bisher gleichzeitig eine stärkere Haupttellerfeder ausgelegt / zur Verfügung gestellt werden, was wiederum zu Problemen hinsichtlich der Bauteilspannung führen kann.

Eine Reibungskupplung gemäß dem Oberbegriff des Patentanspruchs 1 ist aus der
DE 10 2008 027 056 A1 bekannt.

Es ist Aufgabe der vorliegenden Erfindung, die aus dem Stand der Technik bekannten Nachteile zu beheben und eine nachstellbare, betriebssichere Reibungskupplung zur Verfügung zu stellen, die zur Dämpfung der Kupplungsschwingungen und somit zur Reduktion von Geräuschproblemen im Fahrzeug ein zusätzliches / stärker ausgeprägtes Hystereseverhalten aufweist.

Erfindungsgemäß gelöst wird diese Aufgabe durch eine Reibungskupplung gemäß Patentanspruch 1. Bevorzugte Ausführungsbeispiele der Erfindung sind in den abhängigen Patentansprüchen dargelegt.

Die Zusatzfeder ist so angeordnet, dass sie entgegen der auf das Stellhebelelement einwirkenden Stützfederkraft eine Zusatzfederkraft auf das Stellhebelelement aufbringt.

Durch die Zusatzfeder ist ein weiteres Federelement auf die Tellerfeder einwirkend, durch das das Dämpfungsverhalten der Kupplung und das Bewegungsverhalten der Tellerfeder beim Ein- und Ausrücken vorteilhaft beeinflusst werden. Die Zusatzfeder kann so positioniert sein, dass sich eine Anpresskraft (Ausrückkraft oder Einrückkraft), die beim Ausrücken oder beim Einrücken der Kupplung an der Tellerfeder aufgebracht werden muss, nicht verändert, sondern sich lediglich die Dämpfung erhöht. Alternativ dazu kann die Zusatzfeder auch zum Verstärken der Anpresskraft der Haupttellerfeder an der Anpressplatte eingesetzt werden. In jedem Fall wird die Dämpfung durch die sich beim Ein- und Ausrücken bewegende Zusatzfeder positiv beeinflusst, wobei durch die Zusatzfeder ein zusätzlicher, die Dämpfung erhöhender Reibungsverlust entsteht, der sich wiederum auf das Hystereseverhalten der Tellerfeder auswirkt. Schwingungen, insbesondere in axialer Richtung der Kupplung, werden somit getriebeseitig wesentlich geschwächt.

Von Vorteil ist es, wenn die Zusatzfeder auf einer Seite des Stellhebelelementes, etwa (axial) neben diesem, angeordnet ist, die der Stützfeder abgewandt ist, und / oder die Zusatzfeder durch das Gegenabstützelement kraftschlüssig gehalten ist. Dadurch ist eine besonders kompakte Bauweise umsetzbar.

Gemäß einer weiteren vorteilhaften Ausführungsform ist es möglich, die Stützfeder und die Zusatzfeder derart auszugestalten und an dem Stellhebelelement anzulegen, dass das Stellhebelelement eine ein Hystereseverhalten aufweisende Federkraft-Weg-Kennlinie ausbildet. Dadurch ist der Verschiebeweg des Auslenkpunktes des Stellhebelelementes, der beim Ein- und Ausrücken unmittelbar verschoben wird, von dieser Kennlinie abhängig. Dadurch ist eine besonders effiziente Ausgestaltung der Reibungskupplung möglich.

Die Stützfeder liegt unmittelbar an einem ersten radialen Auflagebereich an dem Stellhebelelement an, und die Zusatzfeder liegt unmittelbar an einem zweiten Auflagebereich an dem Stellhebelelement an. So sind die Auflagebereiche der die Tellerfeder / das Stellhebelelement beeinflussenden Federelemente entgegengesetzt anordenbar, wodurch sich der benötigte Bauraum weiter reduziert und weiterhin besonders einfach, durch Positionierung der Auflagebereich, insbesondere in radialer Richtung, zueinander, verschiedene Tellerfederkennlinien umsetzbar.

Zusätzlich ist es auch möglich, dass der erste Auflagebereich eine radiale Innenseite ausbildet, die einen ersten Durchmesser hat, und der zweite Auflagebereich eine radiale Innenseite ausbildet, die einen zweiten Durchmesser hat, wobei der erste Durchmesser kleiner oder gleich dem zweiten Durchmesser ist, und / oder wobei der erste Auflagebereich und der zweite Auflagebereich zumindest abschnittsweise kreisringförmig ausgebildet sind. Dadurch ist besonders einfach entweder ein ausgleichender Betriebspunkt, in dem weder die Stützfeder noch die Zusatzfeder die am Ein- oder Ausrücksystem anliegende Verschiebekraft beeinflussen, oder ein verstärkender Betriebspunkt ausgestaltbar, an dem die zweite Zusatzfeder die Haupttellerfeder sogar in ihrer gegen die Anpressplatte angedrückten Lage verstärkt. Dadurch ist eine besonders materialschonende Ausführung umsetzbar, die die Haltbarkeit der Zusatzfeder / des Stellhebelelementes vorteilhaft beeinflusst.

Der zweite Auflagebereich ist (in Gänze) radial außerhalb des ersten Auflagebereichs befindlich. Dadurch kann eine noch stärkere Unterstützung des Stellhebelelementes realisiert werden, ohne die Federelemente stärker auszulegen oder den Bauraum zu erhöhen.

Ist weiterhin das Gegenabstützelement radial innerhalb eines Auflagebereiches zwischen der Zusatzfeder und dem Stellhebelelement unmittelbar an dem Stellhebelelement anliegend, so ist eine besonders kompakte Bauweise der erfindungsgemäßen Reibungskupplung möglich.

Zusätzlich ist es auch von Vorteil, wenn die Zusatzfeder in axialer Richtung zwischen dem Kupplungsdeckel und dem Stellhebelelement geklemmt und / oder gehalten ist. Somit ist die Zusatzfeder auch noch lagegesichert und die Betriebssicherheit der Kupplung wird weiter gesteigert.

In einer weiteren Ausführungsform ist es auch von Vorteil, wenn die Zusatzfeder derart relativ zur Stützfeder sowie dem Stellhebelelement angeordnet ist, dass die Zusatzfeder das Stellhebelelement in Richtung der Anpressplatte abstützt / unterstützend andrückt. Dadurch wird die Gefahr reduziert, dass sich die Tellerfeder / das Stellhebelelement ungewollt von der Anpressplatte / einer anpressplattenseitigen Kontaktfläche löst / beabstandet.

Von Vorteil ist es auch, wenn ein Spindeltrieb vorhanden ist, der derart ausgestaltet und angeordnet ist, dass ein Kontaktpunkt zwischen dem Stellhebelelement und der Anpressplatte in axialer Richtung verschiebbar ist. Auf diese Weise ist auf besonders effiziente Weise eine nachstellbare Reibungskupplung umsetzbar, die auch im Betrieb eine gleichbleibende Hysterese-Kennlinie gewährleistet.

Auch ist es von Vorteil, wenn ein Antriebsstrang für ein Kraftfahrzeug, wie ein Pkw, Lkw oder Bus mit einer Reibungskupplung der oben bezeichneten Ausführungsformen ausgestaltet ist. Dadurch ist auch der Antriebsstrang auf effiziente Weise herstellbar.

In anderen Worten ausgedrückt ist somit eine Tellerfeder einer normal-eingerückten, gedrückten Kupplung (ggf. auch einer normal-ausgerückten, gezogenen Kupplung) umsetzbar, die im Bereich ihrer Zentriereinrichtung mittels einer Schwenklagerung verkippbar am Kupplungsdeckel gelagert ist. Die Schwenklagerung umfasst ein deckelseitiges Lager, das an der dem Kupplungsdeckel zugewandten Oberfläche der Tellerfeder vorgesehen ist, und ein anpressplattenseitiges Lager, das an der der Anpressplatte zugewandten Oberfläche der Tellerfeder vorgesehen ist. Erfindungsgemäß wird vorgeschlagen, dass das deckelseitige Lager neben dem (deckelseitigen) Drahtring eine Zusatzfeder aufweist, die vorzugsweise radial außerhalb des Drahtrings auf der Tellerfeder aufliegt, um (zusätzliche) Hysterese zu erzeugen. Vorzugsweise ist die Zusatzfeder zwischen dem Kupplungsdeckel und dem Drahtring in axialer Richtung geklemmt. Vorzugsweise erfolgt die abwälzende Abstützung der Tellerfeder am deckelseitigen Lager auf einem anderen Durchmesser als die abwälzende Abstützung der Tellerfeder am anpressplattenseitigen Lager erfolgt, um zusätzliche Hysterese zu erzeugen. Insbesondere liegt das anpressplattenseitige Lager in radialer Richtung weiter außen als das deckelseitige Lager. Vorzugsweise kommt diese Art der Hystereseerzeugung bei wegbasierten Verschleißnachstelleinrichtungen, insbesondere bei der TAC-Spindel, zur Anwendung. Dadurch ist insbesondere eine selbstnachstellende Kupplung umsetzbar, die wegabhängig agiert, gemäß einer TAC (travel adjusted clutch). Durch Einsatz einer zweiten, deckelseitig eingesetzten Stützfeder, die gleichzeitig den Drahtring aufnimmt, damit die Anpresskraft über den Drahtring am Deckel abgestützt werden kann, kann je nach Wahl des Durchmessers der Auflage ein ausgleichendes bzw. sogar ein verstärkenden Moment zur Unterstützung der Haupttellerfeder erzeugt werden. Gleichzeitig wird hierdurch eine weitere Reibstelle erzeugt, die zusätzliche Hysterese erzeugt.

Die Erfindung wird nun nachfolgend mit Hilfe von Zeichnungen in unterschiedlichen Ausführungsbeispielen näher erläutert.

Es zeigen:
- Fig. 1: einen Längsschnitt durch eine erste Ausführungsform einer erfindungsgemäßen Reibungskupplung, welcher Längsschnitt entlang der Drehachse durchgeführt ist und die Zusatzfeder-Tellerfeder-Anordnung zeigt, die den Betriebspunkt verstärkt, und
- Fig. 2: einen Längsschnitt durch eine zweite Ausführungsform einer erfindungsgemäßen Reibungskupplung, wobei der Schnitt gemäß dem Schnitt nach Fig. 1 durchgeführt ist, jedoch eine Zusatzfedern-Tellerfeder-Anordnung offenbart, in der ein ausgeglichener Betriebspunkt umgesetzt ist.

Die Figuren sind lediglich schematischer Natur und dienen nur dem Verständnis der Erfindung. Die gleichen Elemente sind mit denselben Bezugszeichen versehen.

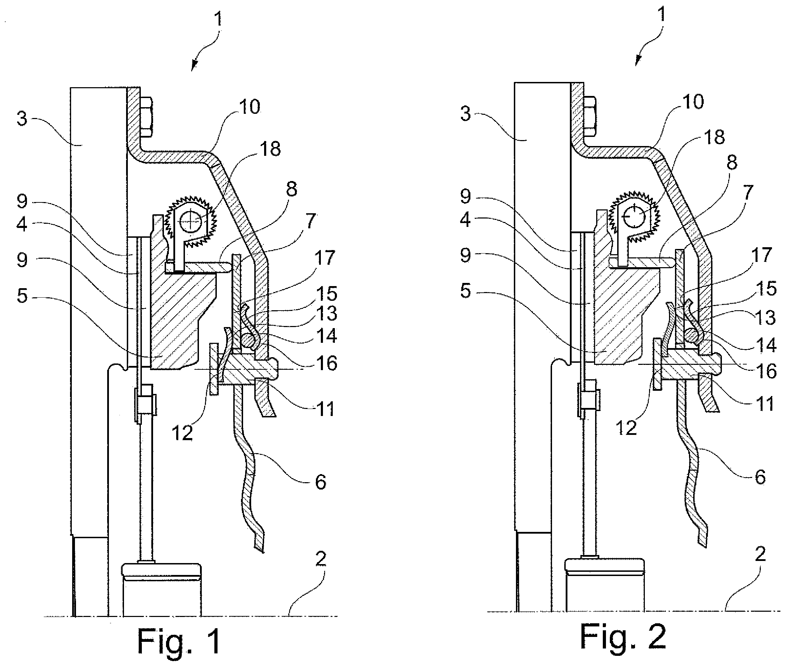

In Fig. 1 ist eine Ausführung einer erfindungsgemäßen Reibungskupplung 1 übersichtlich dargestellt. Die dargestellte Reibungskupplung ist als trocken laufende Reibungskupplung 1 ausgeführt. Alternativ dazu kann sie jedoch auch als nass laufende Reibungskupplung 1 ausgestaltet sein. Die Reibungskupplung 1 ist für den Einsatz in einem Antriebsstrang eines Kraftfahrzeuges, wie einem Pkw, Lkw, Bus, einer landwirtschaftlichen Lastmaschine, oder allgemein Nutzfahrzeugen, ausgestaltet, welcher Antriebsstrang der Übersichtlichkeit halber nicht weiter dargestellt ist. Die Reibungskupplung 1 ist als nachstellbare Reibungskupplung 1 ausgeführt, nämlich als eine TAC (Travel Adjusted Clutch / wegabhängig nachstellende Reibungskupplung).

Die Reibungskupplung 1 ist in ihrer Funktion im Wesentlichen gemäß der in der DE 10 2010 051 150 A1 offenbarten selbstnachstellenden Reibungskupplung ausgeführt. Die Reibungskupplung 1 weist eine drehbar um eine Drehachse 2 der Reibungskupplung 1 gelagerte Druckplatte 3 auf. Die Druckplatte 3 ist auf übliche Weise mit einer Verbrennungskraftmaschinenausgangswelle / Kurbelwelle einer der Übersichtlichkeit halber nicht weiter dargestellten Verbrennungskraftmaschine, wie einem Ottomotor oder einem Dieselmotor, drehfest verbindbar / im Betriebszustand des Kraftfahrzeuges drehfest verbunden. Die Druckplatte ist als eine Schwungscheibe 3 ausgeführt. Die kupplungseingangsseitig / antriebsseitig positionierte Druckplatte 3 ist mit einer Kupplungsscheibe 4 drehfest mittels Reibkraftschluss verbindbar. Für das Erreichen dieses Zustandes, kontaktieren zur Drehmomentenübertragung die Druckplatte 3 sowie eine Anpressplatte 5 die Kupplungsscheibe 4 beidseitig zumindest in einem eingekuppelten Zustand / eingekuppelten Betriebszustand und klemmen die Kupplungsscheibe 4 zwischen sich drehfest ein. Die Kupplungsscheibe 4 wiederum ist mit einer Getriebeeingangswelle eines nicht weiter dargestellten Getriebes drehfest verbindbar / im Betriebszustand drehfest verbunden, so dass eine Drehbewegung von der Druckplatte 3 im Betriebszustand auf die kupplungsausgangsseitige Kupplungsscheibe 4 übertragen wird.

Um die Kupplungsscheibe 4 zwischen der Druckplatte 3 und der Anpressplatte 5 einzuklemmen, ist ein Stellhebelelement 6, das als Tellerfeder 6 ausgeführt und als solches nachfolgend bezeichnet ist, angeordnet. Die Tellerfeder 6 kontaktiert in einem radial äußeren Anpressplattenkontaktbereich 7 ein ringförmiges Übertragungselement 8 / einen Verstellring 8, welches Übertragungselement 8 in axialer Richtung wiederum fest an der Anpressplatte 5 anliegt. Das Übertragungselement 8 ist vorzugsweise als Rampenring ausgestaltet, welcher Rampenring axial, in Richtung der Anpressplatte 5 erstreckende Rampen aufweist, welche Rampen sich bei Verdrehung des Übertragungselementes 8 relativ zur Anpressplatte 5 an axialen Gegenrampen der Anpressplatte 5, welche Gegenrampen sich axial zum Übertragungselement hin erstrecken, entlang verschieben. Bei einem relativen Verdrehen des Übertragungselementes 8 gegenüber der Anpressplatte 5 wird daher der axiale Abstand zwischen dem Anpressplattenkontaktbereich 7 der Tellerfeder 6 und der Anpressplatte 5 verändert. Dadurch ist eine Nachstellbarkeit / Verstellbarkeit der Tellerfeder 6 ermöglicht.

Im Weiteren ist die Kupplungsscheibe 4 auf übliche Weise in axialer Richtung, d.h. entlang der Drehachse 2 verschiebbar gelagert, so dass im eingekuppelten Zustand die Kupplungsscheibe 4 und die Anpressplatte 5 mittels der Tellerfederkraft der Tellerfeder 6 reibkraftschlüssig mit der Druckplatte 3 verbunden und drehfest zusammenwirkend sind. Die Kupplungsscheibe 4 weist zum reibkraftschlüssigen Kontaktieren mit der Druckplatte 3 sowie der Anpressplatte 4 Reibbeläge 9 auf, die jeweils an der der Druckplatte 3 zugewandten Seite sowie der der Anpressplatte 5 zugewandten Seite der Kupplungsscheibe 4 angeordnet sind.

Die Tellerfeder 6 ist relativ zu einem drehfest / fest mit der Druckplatte 3 verbundenen Gehäusedeckel 10 gelagert. Zu diesem Zwecke sind mehrere Zentrierbolzen 11 mit einem Ende fest mit dem Gehäusedeckel / dem Kupplungsdeckel 10 verbunden und an ihrer Mantelfläche relativ zu der Tellerfeder 6 verschiebbar. Die Tellerfeder 6 ist daher in axialer Richtung entlang jedes Zentrierbolzens 11 verschiebbar, jedoch in radialer Richtung durch die Zentrierbolzen 11 lagegesichert. Als anpressplattenseitiges Lager dient eine Stützfeder 12, die sich mit einem Ende an einem axialen Absatz des Zentrierbolzens 11 abstützt und mit einem anderen Ende, nachfolgend als erster Auflagebereich 13 bezeichnet, an einer der Anpressplatte 5 zugewandten Seite der Tellerfeder 6 abstützt. Die Stützfeder 12 ist somit in axialer Richtung zwischen der Tellerfeder 6 und der Anpressplatte 5 angeordnet. Als deckelseitiges Lager dient ein Drahtring 14, der an einer der Anpressplatte 5 abgewandten Seite / einer dem Gehäusedeckel 10 zugewandten Seite der Tellerfeder 6, die Tellerfeder 6 kontaktierend anliegt. Dadurch ist die Tellerfeder 6 mittels der Abstützung an dem ersten Auflagebereich 13 der Stützfeder 12 sowie an dem Drahtring 14 schwenkbar gehalten.

Die Reibungskupplung 1 ist als eine normal eingerückte ("normally-closed"), gedrückte Reibungskupplung 1 ausgestaltet, was bedeutet, dass die Tellerfeder 6 derart mit der Stützfeder 13 und dem Drahtring 14 zusammenwirkt, dass sie in einer Ausgangslage, wie sie in den Fig. 1 und 2 dargestellt ist, die Anpressplatte 5 gegen die Kupplungsscheibe 4 und somit gegen die Druckplatte 3 drückt. Die Reibungskupplung 1 kann alternativ dazu jedoch auch als eine normal ausgerückte ("normally-open"), gezogene Reibungskupplung 1 ausgestaltet sein, wobei die Tellerfeder 6 dann in einem Ausgangszustand kraftlos an der Anpressplatte 5 oder gar beabstandet zur Anpressplatte 5 angeordnet/anliegend ist.

Erfindungsgemäß ist weiterhin eine Zusatzfeder 15 / zweite Stützfeder an der Tellerfeder 6 anliegend. Die Zusatzfeder 15 ist, im Querschnitt betrachtet, im Wesentlichen S-förmig, ausgestaltet. Die Form der Zusatzfeder 15 kann jedoch auch anders ausgestaltet sein. Mit einem radial inneren Abstützbereich ist die Zusatzfeder 15 einerseits mit ihrer der Tellerfeder 6 zugewandten Seite an dem Drahtring 14 anliegend. Andererseits liegt die Zusatzfeder 15 in diesem Abstützbereich 16 mit ihrer der Tellerfeder 6 abgewandten Seite am Gehäusedeckel 10, nämlich an der der Anpressplatte 5 zugewandten Seite des Gehäusedeckels 10, an. In radialer Richtung weiter außen / weiter von der Drehachse 2 entfernt, schließt an den Abstützbereich 16 ein Auflagebereich, nachfolgend als zweiter Auflagebereich 17 bezeichnet, an. Mit diesem zweiten Auflagebereich 17 ist die Zusatzfeder 15 unmittelbar in Kontakt mit der Tellerfeder 6, nämlich der der Anpressplatte 5 abgewandten / der dem Gehäusedeckel 10 zugewandten Seite der Tellerfeder 6. Daher ist die Zusatzfeder 15 einerseits in axialer Richtung zwischen dem Drahtring 14 und dem Gehäusedeckel 10 eingeklemmt / gehalten, andererseits an der Tellerfeder 6 abgestützt.

Durch die Anordnungen der Stützfeder 12 sowie der Zusatzfeder 15 ist die Tellerfeder 6 somit durch zwei Federelemente gehalten und abgestützt. Die Stützfeder 12 stützt sich dabei derart an der Tellerfeder 6 ab, dass ihre resultierende, an der Tellerfeder 6 anliegende Kraft (Stützfederkraft) in axialer Richtung entgegengesetzt zu der von der Zusatzfeder 15 an die Tellerfeder 6 übertragene Kraft (Zusatzfederkraft) wirkt / ausgerichtet ist. Dadurch ist die Tellerfeder 6 zwischen diesen beiden Federelementen, in axialer Richtung, eingeklemmt und gehalten.

In Fig. 1 ist der zweite Auflagebereich 17 in radialer Richtung weiter außen als der erste Auflagebereich 13 angeordnet. Auch ist der zweite Auflagebereich 17 in radialer Richtung beabstandet zum ersten Auflagebereich 13 angeordnet. Dadurch ergibt sich eine verstärkende Stellung / verstärkte Stellung der Zusatzfeder 15, durch die die Tellerfeder 6 gegen das Übertragungselement 8 angedrückt ist. Die Tellerfeder 6 wird in ihrer Lage verstärkt. Alternativ dazu ist es auch möglich, die Tellerfeder 6 an sich in ihrer Ausgestaltung dünnwandiger umzusetzen, wodurch die Federhärte der Tellerfeder 6 niedriger gewählt werden kann.

Alternativ zu dieser Ausführung ist es, wie in Fig. 2 dargestellt, auch möglich, einen ausgeglichenen Zustand der Tellerfeder 6 durch die Anordnung der Stützfeder 12 relativ zur Zusatzfeder 15 zu erreichen. In diesem Ausführungsbeispiel sind der erste Auflagebereich 13 und der zweite Auflagebereich 17 im Wesentlichen auf einer gleichen radialen Höhe angeordnet. Dadurch ist es möglich, eine Abstützung zu gewährleisten, die die Federkraft, die aus der Tellerfeder 6 an ein hier nicht weiter dargestelltes drehachsennahes Ausrücksystem weitergegeben wird, reduziert.

Zum Nachstellen der nachstellbaren Reibungskupplung 1, nach einem bestimmten Verschleiß der Reibbeläge 9, wird der axiale Abstand zwischen dem Anpressplattenkontaktbereich 7 der Tellerfeder 6 und der Anpressplatte 5 verändert. Dies geschieht dadurch, dass das Rampen aufweisende Übertragungselement 8 mittels einer in Form eines Spindelantriebes 18 ausgestalteten Nachstelleinrichtung 18 relativ zur Anpressplatte 5 verdreht wird und somit die zuvor beschriebenen Rampen und Gegenrampen aneinander abgleiten. Dadurch vergrößert sich der axiale Abstand zwischen dem Übertragungselement 8 und der Anpressplatte 5 und der Anpressplattenkontaktbereich 7 verlagert sich dementsprechend in axialer Richtung. Schließlich, nach dem Verschiebevorgang, ist die Neigung der Tellerfeder 6 wieder in den Ausgangszustand zurückgestellt.

### Bezugszeichenliste

- 1: Reibungskupplung
- 2: Drehachse
- 3: Druckplatte / Schwungscheibe
- 4: Kupplungsscheibe
- 5: Anpressplatte
- 6: Stellhebelelement / Tellerfeder
- 7: Anpressplattenkontaktbereich
- 8: Übertragungselement / Verstellring
- 9: Reibbeläge
- 10: Gehäusedeckel / Kupplungsdeckel
- 11: Zentrierbolzen
- 12: Stützfeder
- 13: erster Auflagebereich
- 14: Drahtring
- 15: Zusatzfeder
- 16: Abstützbereich
- 17: zweiter Auflagebereich
- 18: Spindelantrieb / Nachstelleinrichtung

## Patentansprüche

1. Reibungskupplung (1) für einen Antriebsstrang eines Kraftfahrzeuges, mit einem Stellhebelelement (6), das eine relativ zu einer Druckplatte (3) verschiebbare Anpressplatte (5) zumindest in einem eingekuppelten Zustand gegen einen Reibbelag (9) einer Kupplungsscheibe (4) andrückt, mit einer Stützfeder (12), die das Stellhebelelement (6) mit einer Stützfederkraft an einer der Anpressplatte (5) zugewandten ersten Seite abstützt, sowie mit einem Gegenabstützelement (14), das an einer zweiten, einem drehfest mit der Druckplatte (3) verbundenen Kupplungsdeckel (10) zugewandten Seite des Stellhebelelementes (6), das Stellhebelelement (6) lagernd, anliegt, wobei eine Zusatzfeder (15) so angeordnet ist, dass sie entgegen der auf das Stellhebelelement (6) einwirkenden Stützfederkraft eine Zusatzfederkraft auf das Stellhebelelement (6) aufbringt, wobei die Stützfeder (12) unmittelbar an einem ersten radialen Auflagebereich (13) an dem Stellhebelelement (6) anliegt, und die Zusatzfeder (15) unmittelbar an einem zweiten Auflagebereich (17) an dem Stellhebelelement (6) anliegt, **dadurch gekennzeichnet, dass** der zweite Auflagebereich (17) radial außerhalb des ersten Auflagebereichs (13) befindlich ist.

2. Reibungskupplung (1) nach Anspruch 1, **dadurch gekennzeichnet, dass** die Zusatzfeder (15) auf einer Seite des Stellhebelelementes (6) angeordnet ist, die der Stützfeder (12) abgewandt ist, und / oder die Zusatzfeder (15) durch das Gegenabstützelement (14) kraftschlüssig gehalten ist.

3. Reibungskupplung (1) nach Anspruch 1 oder 2, **dadurch gekennzeichnet, dass** die Stützfeder (12) und die Zusatzfeder (15) derart ausgestaltet und an dem Stellhebelelement (6) anliegend sind, dass das Stellhebelelement (6) eine ein Hystereseverhalten aufweisende Federkraft-Weg-Kennlinie ausbildet.

4. Reibungskupplung (1) nach einem der Ansprüche 1 bis 3, **dadurch gekennzeichnet, dass** der erste Auflagebereich (13) eine radiale Innenseite ausbildet, die einen ersten Durchmesser hat, und der zweite Auflagebereich (17) eine radiale Innenseite ausbildet, die einen zweiten Durchmesser hat, wobei der erste Durchmesser kleiner als der zweite Durchmesser ist, und / oder wobei der erste Auflagebereich (13) und der zweite Auflagebereich (17) zumindest abschnittsweise kreisringförmig ausgebildet sind.

5. Reibungskupplung (1) nach einem der Ansprüche 1 bis 4, **dadurch gekennzeichnet, dass** das Gegenabstützelement (14) radial innerhalb des zweiten Auflagebereiches (17) zwischen der Zusatzfeder (15) und dem Stellhebelelement (6) unmittelbar an dem Stellhebelelement (6) anliegt.

6. Reibungskupplung (1) nach einem der Ansprüche 1 bis 5, **dadurch gekennzeichnet, dass** die Zusatzfeder (15) in axialer Richtung zwischen dem Kupplungsdeckel (10) und dem Stellhebelelement (6) geklemmt und / oder gehalten ist, und / oder die Zusatzfeder (15) derart relativ zur Stützfeder (13) sowie dem Stellhebelelement (6) angeordnet ist, dass die Zusatzfeder (15) das Stellhebelelement (6) in Richtung der Anpressplatte (5) abstützt.

7. Reibungskupplung (1) nach einem der Ansprüche 1 bis 6, **dadurch gekennzeichnet, dass** ein Spindeltrieb (18) vorhanden ist, der derart ausgestaltet und angeordnet ist, dass ein Kontaktpunkt zwischen dem Stellhebelelement (6) und der Anpressplatte (5) in axialer Richtung verschiebbar ist.

8. Antriebsstrang für ein Kraftfahrzeug, wie einen PKW, LKW oder Bus, mit einer Reibungskupplung (1) nach einem der Ansprüche 1 bis 7.

## Claims

1. Friction clutch (1) for a drive train of a motor vehicle, having an actuating lever element (6) which, at least in an engaged state, presses a pressing plate (5), which can be displaced relative to a pressure plate (3), against a friction lining (9) of a clutch plate (4), having a supporting spring (12) which supports the actuating lever element (6) with a supporting spring force on a first side which faces the pressing plate (5), and having a counter-supporting element (14) which bears, in a manner which mounts the actuating lever element (6), against a side of the actuating lever element (6), which side faces a clutch cover (10) which is connected fixedly to the pressure plate (3) so as to rotate with it, an additional spring (15) being arranged in such a way that it applies an additional spring force to the actuating lever element (6) counter to the supporting spring force which acts on the actuating lever element (6), the supporting spring (12) bearing directly against a first radial bearing region (13) on the actuating lever element (6), and the additional spring (15) bearing directly against a second bearing region (17) on the actuating lever element (6), **characterized in that** the second bearing region (17) is situated radially outside the first bearing region (13).

2. Friction clutch (1) according to Claim 1, **characterized in that** the additional spring (15) is arranged on a side of the actuating lever element (6), which side faces away from the supporting spring (12), and/or the additional spring (15) is held in a non-positive manner by way of the counter-supporting element (14).

3. Friction clutch (1) according to Claim 1 or 2, **characterized in that** the supporting spring (12) and the additional spring (15) are configured and bear against the actuating lever element (6) in such a way that the actuating lever element (6) configures a spring force-displacement characteristic curve which has a hysteresis behaviour.

4. Friction clutch (1) according to one of Claims 1 to 3, **characterized in that** the first bearing region (13) configured as a radial inner side which has a first diameter, and the second bearing region (17) configures a radial inner side which has a second diameter, the first diameter being smaller than the second diameter, and/or the first bearing region (13) and the second bearing region (17) being of circularly annular configuration at least in sections.

5. Friction clutch (1) according to one of Claims 1 to 4, **characterized in that** the counter-supporting element (14) bears directly against the actuating lever element (6) radially within the second bearing region (17) between the additional spring (15) and the actuating lever element (6).

6. Friction clutch (1) according to one of Claims 1 to 5, **characterized in that** the additional spring (15) is clamped and/or held in the axial direction between the clutch cover (10) and the actuating lever element (6), and/or the additional spring (15) is arranged relative to the supporting spring (13) and the actuating lever element (6) in such a way that the additional spring (15) supports the actuating lever element (6) in the direction of the pressing plate (5).

7. Friction clutch (1) according to one of Claims 1 to 6, **characterized in that** there is a spindle drive (18) which is configured and arranged in such a way that a contact point between the actuating lever element (6) and the pressing plate (5) can be displaced in the axial direction.

8. Drive train for a motor vehicle, such as a passenger car, lorry or bus, having a friction clutch (1) according to one of Claims 1 to 7.

## Revendications

1. Embrayage à friction (1) pour une chaîne cinématique d'un véhicule automobile, comprenant un élément de levier de réglage (6) qui, au moins dans un état embrayé, presse un plateau de pressage (5) déplaçable par rapport à un plateau de pression (3) contre une garniture de friction (9) d'un disque d'embrayage (4), comprenant un ressort de support (12) qui supporte l'élément de levier de réglage (6) avec une force de ressort de support contre un premier côté tourné vers le plateau de pressage (5), et un élément d'appui conjugué (14) qui s'applique, en supportant l'élément de levier de réglage (6), contre un deuxième côté de l'élément de levier de réglage (6) tourné vers un couvercle d'embrayage (10) connecté de manière solidaire en rotation au plateau de pression (3), un ressort supplémentaire (15) étant disposé de telle sorte qu'il exerce, à l'encontre de la force de ressort de support agissant sur l'élément de levier de réglage (6), une force de ressort supplémentaire sur l'élément de levier de réglage (6), le ressort de support (12) s'appliquant directement au niveau d'une première région d'appui radiale (13) contre l'élément de levier de réglage (6), et le ressort supplémentaire (15) s'appliquant directement au niveau d'une deuxième région d'appui (17) contre l'élément de levier de réglage (6), **caractérisé en ce que** la deuxième région d'appui (17) est située radialement à l'extérieur de la première région d'appui (13).

2. Embrayage à friction (1) selon la revendication 1, **caractérisé en ce que** le ressort supplémentaire (15) est disposé sur un côté de l'élément de levier de réglage (6) qui est opposé au ressort de support (12) et/ou le ressort supplémentaire (15) est retenu par engagement par force par l'élément d'appui conjugué (14).

3. Embrayage à friction (1) selon la revendication 1 ou 2, **caractérisé en ce que** le ressort de support (12) et le ressort supplémentaire (15) sont configurés et s'appliquent contre l'élément de levier de réglage (6) de telle sorte que l'élément de levier de réglage (6) constitue une courbe caractéristique force de ressort-course présentant un comportement d'hystérésis.

4. Embrayage à friction (1) selon l'une quelconque des revendications 1 à 3, **caractérisé en ce que** la première région d'appui (13) constitue un côté intérieur radial qui présente un premier diamètre et la deuxième région d'appui (17) constitue un côté intérieur radial qui présente un deuxième diamètre, le premier diamètre étant inférieur au deuxième diamètre et/ou la première région d'appui (13) et la deuxième région d'appui (17) étant réalisées au moins en partie sous forme annulaire circulaire.

5. Embrayage à friction (1) selon l'une quelconque des revendications 1 à 4, **caractérisé en ce que** l'élément d'appui conjugué (14) s'applique radialement à l'intérieur de la deuxième région d'appui (17) entre le ressort supplémentaire (15) et l'élément de levier de réglage (6) directement contre l'élément de levier de réglage (6).

6. Embrayage à friction (1) selon l'une quelconque des revendications 1 à 5, **caractérisé en ce que** le ressort supplémentaire (15) est serré et/ou retenu dans la direction axiale entre le couvercle d'embrayage (10) et l'élément de levier de réglage (6), et/ou le ressort supplémentaire (15) est disposé par rapport au ressort de support (13) et à l'élément de levier de réglage (6) de telle sorte que le ressort supplémentaire (15) supporte l'élément de levier de réglage (6) dans la direction du plateau de pressage (5).

7. Embrayage à friction (1) selon l'une quelconque des revendications 1 à 6, **caractérisé en ce qu'**un entraînement à broche (18) est prévu, lequel est configuré et disposé de telle sorte qu'un point de contact entre l'élément de levier de réglage (6) et le plateau de pressage (5) puisse être déplacé dans la direction axiale.

8. Chaîne cinématique pour un véhicule automobile tel qu'un véhicule léger, un poids-lourd ou un bus, comprenant un embrayage à friction (1) selon l'une quelconque des revendications 1 à 7.
